# EUROPEAN PATENT APPLICATION

(11) **EP 1 783 617 A1**
(43) Date of publication of application: **09.05.2007**
(21) Application number: 04772356.4
(22) Date of filing: 27.08.2004
(51) Int. Cl.: G06F 13/00, H04N 7/173, G06F 12/14

(54) **INFORMATION PROCESSING DEVICE, DATA DISPLAY METHOD, INFORMATION PROCESSING SYSTEM, DATA DISPLAY PROGRAM, AND COMPUTER-READABLE RECORDING MEDIUM HAVING DATA DISPLAY PROGRAM RECORDED THEREIN**

(71) Applicant: Fujitsu Ltd., Kawasaki-shi, Kanagawa 211-8588 (JP)
(72) Inventor: NAKAMURA, Yousuke, c/o FUJITSU LIMITED, Kawasaki-shi, Kanagawa 211-8588 (JP); TSUTSUMI, Shinji, c/o FUJITSU LIMITED, Kawasaki-shi, Kanagawa 211-8588 (JP)
(74) Representative: Hitching, Peter Matthew
(86) International application number: PCT/JP2004/012400
(87) International publication number: WO 2006/022022

(57) **Abstract**

In an information processing apparatus (30) connected to at least one data retaining apparatus (20) over a network (10) to execute a process on data kept in the data retaining apparatus (20), it is possible to display, with certainty, data identification information of data that was retrieved in the past and discriminate, with ease, whether or not data of the displayed data identification information is usable or not, irrespective of the activation state of the data retaining apparatus (20). For The information processing apparatus (30) has a display controlling unit (61) which displays data identification information together with information representing whether data of the data identification information is accessible or not on a displaying unit (60) on the basis of a data list including the data identification information of the data and a retaining place of the data, and a situation of monitoring by a server monitoring unit (53).

## Description

### Technical field

The present invention relates to a technique for displaying data on a displaying unit connected to an information processing apparatus in an information processing system in which a data retaining apparatus (server) keeping data (for example, contents data) and the information processing apparatus executing a process on the data kept in the data retaining apparatus are connected over a network.

### Background Art

There has been a system in which an equipment functioning as a client among a plurality of equipments (for example, personal computers, recording/regenerating devices, portable recording/regenerating devices, recording devices, portable recording devices) connected over a network performs processes such as recording/regenerating and the like on not only data (for example, contents data of media contents) kept in itself but also data (hereinafter, referred to as contents data) kept in another equipment on the network. Incidentally, another equipment (data retaining apparatus) keeping data on the network will be hereinafter referred to as a server.

In such a system, an information processing apparatus (hereinafter, referred to simply as a client) operating as a client retrieves contents data from a server on the network on the basis of an application program (hereinafter, referred to simply as an application) executing a process on the contents data, displays a contents name or the like of the retrieved contents data on a display unit (monitor or the like) connected to this information processing apparatus, and executes a process such as regeneration or the like.

Incidentally, the client retrieves contents data from a server connected to the network by executing multi-casting on the basis of an extension discriminating an attribute of the contents data, for example, and makes a list of contents information such as a contents name, an attribute and so forth of the retrieved contents data.

The client executes a process on the contents data, using the listed contents information.

There have been a technique which establishes a communication with a terminal inside a LAN from the outside by using the Internet communication (refer to Patent Document 1 below, for example), and a technique which transfers contents among a plurality of nodes connected over a network to distribute and place plural sorts of contents in each node (refer to Patent Document 2 below, for example).

In the above-mentioned known system, the client retrieves and lists contents data distributed on the network each time an application executing a process on the contents data is activated.

For this, there may occur a case where, depending on the activation state of the server, for example, when the power source of the server connected to the network is in the OFF state, or when the server is in the stand-by state, or when the server is physically disconnected from the network, contents data kept in this server is not listed because the contents data kept in the server is not retrieved although the clients accessed to the contents data kept in the server in the past, and, as a result, a contents name and the like, which is data identification information of the contents data, are not displayed on the display unit.

Another case is that when the activation state of the server changes and the server becomes absent from the network while the application executing a process on the contents data is activated, contents information relating to the contents data kept in this server is deleted from the list, and is not displayed on the display unit.

As this, the known system has a disadvantage that contents data that should exist may abruptly disappear for a user (operator) operating the client because the contents data is not displayed on the display unit connected to the client depending on the activation state of the server keeping the contents data although the contents data was accessed in the past.

In order to restore the activation state of the server, the user has to go up to the server and restore the activation state of the server. Further, the contents kept in the server cannot be displayed unless the client is re-activated and the contents data is retrieved and listed, which is troublesome for the user.

In the light of the above problems, an object of the present invention is to make it possible to display, with certainty, data identification information about data that was retrieved in the past irrespective of the activation state of a data retaining apparatus keeping the data, and readily discriminate whether the data of the displayed data identification information is usable or not.

Patent Document 1: Japanese Patent Application Laid-Open No. 2003-169075

Patent Document 2: Japanese Patent Application Laid-Open No. 2003-216521

### Disclosure of the Invention

To attain the above object, an information processing apparatus according to this invention is an information processing apparatus connected to at least one data retaining apparatus over a network to execute a process on data kept in said data retaining apparatus, which comprises a data information obtaining unit obtaining data information relating to the data kept in the data retaining apparatus, a data list keeping unit keeping data identification information about the data and a retaining place in which the data is kept as a data list on the basis of the data information obtained by the data information obtaining unit, a data retaining apparatus monitoring unit monitoring whether the data retaining apparatus is accessible or not on the basis of data retaining apparatus information relating to the data retaining apparatus connected to said network, and a display controlling unit displaying the data identification information registered in the data list together with information representing whether the data of the data identification information is accessible or not on a displaying unit on the basis of the data list kept by the data list keeping unit and a situation of the monitoring by the data retaining apparatus monitoring unit.

Incidentally, it is preferable that the data list is based on data information obtained last by the data information obtaining unit in order to display the data information on the displaying unit by the display controlling unit.

It is preferable that the data retaining apparatus monitoring unit detects a change in connection state of the data retaining apparatus to the network to monitor whether the data retaining apparatus is accessible or not. At this time, it is preferable that the data retaining apparatus monitoring unit detects the change in connection state of the data retaining apparatus to the network on the basis of activation/stop information transmitted from the data retaining apparatus.

Further, it is preferable that the display controlling unit displays a data retaining apparatus name of the data retaining apparatus in which the data of the data identification information is kept together with the data identification information on the displaying unit.

It is preferable that the information processing apparatus further comprises a data selecting unit selecting data to be processed on the basis of the data list, and an activating unit activating said data retaining apparatus which keeps the data selected by the data selecting unit, when the situation of the monitoring of the data retaining apparatus by the data retaining apparatus monitoring unit is inaccessible.

To attain the above object, a data displaying method according to this invention is a data displaying method in an information processing apparatus connected to at least one data retaining apparatus over a network to execute a process on data kept in the data retaining apparatus, the data displaying method for displaying the data on a displaying unit equipped to said information processing apparatus comprises the steps of a data information obtaining step obtaining data information relating to the data kept in the data retaining apparatus, a data list keeping step keeping da ta identification information of the data and a retaining place in which the data is kept as a data list on the basis of the data information obtained at the data information obtaining step, a data retaining apparatus monitoring step monitoring whether the data retaining apparatus is accessible or not on the basis of data retaining apparatus information relating to the data retaining apparatus connected to the network, and a display controlling step displaying, on the displaying unit, the data identification information registered in the data list together with information representing whether the data of the data identification information is accessible or not on the basis of the data list kept at the data list keeping step and a situation of the monitoring at the data retaining apparatus monitoring step.

It is preferable that the data list is based on data information obtained last at the data information obtaining step in order to display the data information on the displaying unit at the display controlling step.

It is preferable that, at the data retaining apparatus monitoring step, a change in connection state of the data retaining apparatus to the network is detected to monitor whether the data retaining apparatus is accessible or not. At this time, it is preferable that, at the data retaining apparatus monitoring step, the change in connection state of the data retaining apparatus to the network is detected on the basis of activation/stop information transmitted from the data retaining apparatus.

It is preferable that, at the display controlling step, a data retaining apparatus name of the data retaining apparatus in which the data of the data Identification information is kept is displayed together with the data identification information on the displaying unit.

It is preferable that the data displaying method further comprises the steps of a data selecting step selecting data to be processed on the basis of the data list, and an activating step activating said data retaining apparatus which keeps the data selected at the data selecting step, when the situation of the monitoring at the data retaining apparatus monitoring step of the data retaining apparatus is inaccessible.

To attain the above object, an information processing system according to this invention is an information processing system in which at least one data retaining apparatus and an information processing apparatus executing a process on data kept in the data retaining apparatus are connected over a network, which comprises a data information obtaining unit obtaining data information relating to the data kept in the data retaining apparatus, a data list keeping unit keeping data identification information about the data and a retaining place in which the data is kept as a data list on the basis of the data information obtained by the data information obtaining unit, a data retaining apparatus monitoring unit monitoring whether the data retaining apparatus is accessible or not on the basis of data retaining apparatus information relating to the data retaining apparatus connected to the network, and a display controlling unit displaying the data identification information registered in the data list together with information representing whether the data of the data identification information is accessible or not on a displaying unit connected to the information processing apparatus on the basis of the data list kept by the data list keeping unit and a situation of the monitoring by the data retaining apparatus monitoring unit.

It is preferable that the data list is based on data information obtained last by the data information obtaining unit in order to display the data information on the displaying unit by the display controlling unit. At this time, it is preferable that the data retaining apparatus monitoring unit detects a change in connection state of the data retaining apparatus to the network to monitor whether the data retaining apparatus is accessible or not.

Further, it is preferable that the data retaining apparatus comprises an activation notifying unit notifying the data retaining apparatus monitoring unit of activation/stop information representing an activation state of the data retaining apparatus itself, and the data retaining apparatus monitoring unit detects the change in connection state of the data retaining apparatus to the network on the basis of the activation/stop information transmitted from the activation notifying unit of the data retaining apparatus.

It is preferable that the display controlling unit displays a data retaining apparatus name of the data retaining apparatus in which the data of the data identification information is kept together with the data identification information on the displaying unit.

It is preferable that the information processing system further comprises a data selecting unit selecting data to be processed on the basis of the data list, and an activating unit activating the data retaining apparatus which keeps the data selected by the data selecting unit, when the a situation, of the monitoring of the data retaining apparatus by the data retaining apparatus monitoring unit is inaccessible.

To attain the above object, a data displaying program according to this invention is a data displaying program for making a computer realize a function of displaying data on a displaying unit connected to an information processing apparatus in an information processing system in which at least one data retaining apparatus and the information processing apparatus executing a process on the data kept in the data retaining apparatus are connected over a network, the computer program making the computer function as a data information obtaining unit obtaining data information relating to the data kept in the data retaining apparatus, a data list keeping unit keeping data identification information about the data and a retaining place in which the data is kept as a data list on the basis of the data information obtained by the data information obtaining unit, a data retaining apparatus monitoring unit monitoring whether the data retaining apparatus is accessible or not on the basis of data retaining apparatus information relating to the data retaining apparatus connected to the network, and a display controlling unit displaying the data identification information registered in the data list together with information representing whether the data of the data identification information is accessible or not on a displaying unit on the basis of the data list kept by the data list keeping unit and a situation of the monitoring by the data retaining apparatus monitoring unit.

To attain the above object, a computer readable recording medium according to this invention is recorded thereon the above data displaying program.

According to this invention, on the displaying unit, displayed are data identification information registered in a data list on the basis of a data list including the data identification information of data and a retaining place in which the data is kept, and a situation of monitoring by the data retaining apparatus monitoring unit whether the data retaining apparatus is accessible or not, and information representing whether the data of the data identification information is accessible or not on the basis of a situation of the monitoring of the data retaining apparatus keeping the data of the data identification information by the data retaining apparatus monitoring unit. For this, even when the data retaining apparatus keeping the data is inaccessible, it is possible to display, with certainty, the data on the displaying unit. Namely, it is possible to display data registered, in the data list, which was accessed in the past, irrespective of the activation state of the data retaining apparatus.

Information representing whether data of data identification information is displayed together with the data identification information on the displaying unit, whereby the user can discriminate, at a glance, whether the data displayed on the displaying unit is usable or not.

### Brief Description of the Drawings

[FIG. 1] Block diagram showing a structure of an information processing system according to an embodiment of this invention;
[FIG. 2] Diagram showing a server list kept by a server list keeping unit in the information processing system according to the embodiment of this invention;
[FIG. 3] Flowchart for illustrating a procedure for monitoring by a server monitoring unit in the information processing system according to the embodiment of this invention;
[FIG. 4] Flowchart for illustrating a procedure for monitoring by the server monitoring unit in the information processing system according to the embodiment of this invention;
[FIG. 5] Flowchart for illustrating a procedure for monitoring by the server monitoring unit in the information processing system according to the embodiment of this invention;
[FIG. 6] Flowchart for illustrating a procedure for monitoring by the server monitoring unit in the information processing system according to the embodiment of this invention;
[FIG. 7] Schematic diagram showing an example of display of contents on a displaying unit in the information processing system according to the embodiment of this invention;
[FIG. 8] Schematic diagram showing an example of the display of the contents on the displaying unit in the information processing system according to the embodiment of this invention;
[FIG. 9] Flowchart for illustrating a procedure for restoring a server to an active state by an activating unit in the information processing system according to the embodiment of this invention;
[FIG. 10] Flowchart for illustrating a procedure for initial setting in the information processing system according to the embodiment of this invention;
[FIG. 11] Flowchart for illustrating a procedure for a data displaying method according to the embodiment of this invention;
[FIG. 12] Block diagram showing a structure of an information processing system according to a modification of this invention;
[FIG. 13] Schematic diagram showing an example of display of contents on a displaying unit of the information processing system in FIG. 12 according to the modification of this invention;
[FIG. 14] Block diagram showing a structure of an information processing system according to a modification of this invention;
[FIG. 15] Block diagram showing a structure of an information processing system according to a modification of this invention;
[FIG. 16] Schematic diagram showing an example of display of a server on the displaying unit in the information processing system according to the embodiment of this invention; and
[FIG. 17] Schematic diagram showing an example of display on the displaying unit displayed when the activating unit of the information processing system is executed according to the embodiment of this invention.

### Best Mode for Carrying Out the Invention

Hereinafter, description will be made of an embodiment of the invention with reference to the drawings.

### [1] As to an Embodiment of the Invention

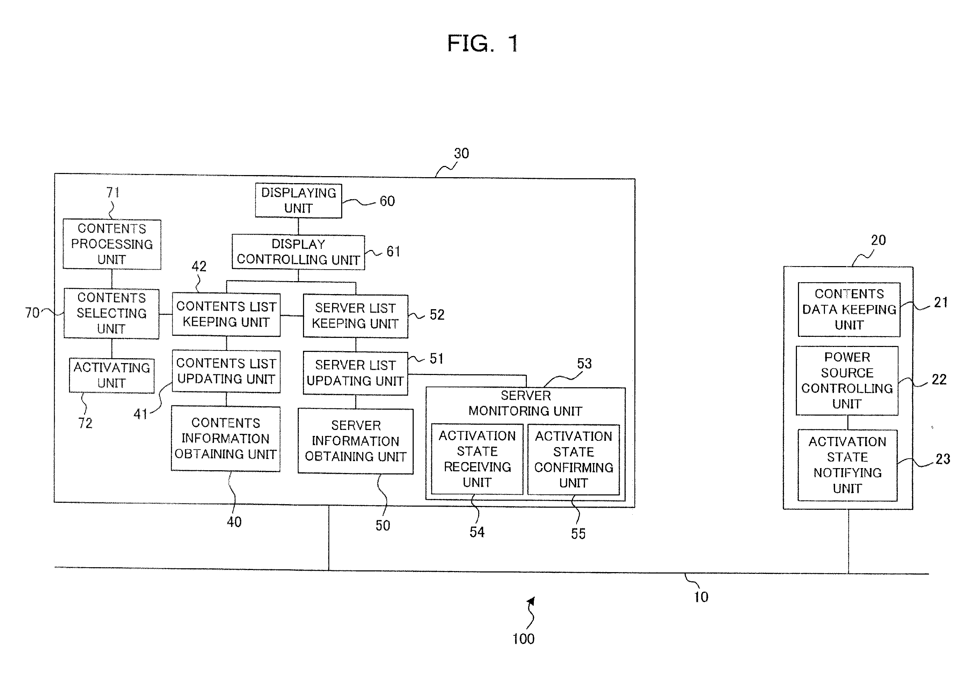

First, description will be made of an information processing system (information processing apparatus) according to an embodiment of this invention. FIG. 1 is a block diagram showing a structure of an information processing system 100 according to an embodiment of this invention.

As shown in FIG. 1, in the information processing system 100, an equipment (hereinafter, referred to as a server) 20 as being a data retaining apparatus, which keeps data (for example, contents data such as media contents or the like) and an information processing apparatus 30 operating as a client are connected over a network 10.

The sever 20 is, for example, a personal computer, a recording/regenerating apparatus, a portable recording/regenerating apparatus, a recording apparatus, or a portable recording apparatus, which keeps data (hereinafter, referred to as contents data). The server 20 comprises, at least, a contents data keeping unit (data keeping unit) 21, a power source controlling unit 22 and an activation state notifying unit 23.

The contents data keeping unit 21 keeps contents data.

The power source controlling unit 22 controls a power source state or an activation state of itself (that is, the server 20). The power source controlling unit 22 activates the power source to the ON state according to an activate instruction (MP: Magic Packet) from an activating unit 72 to be described later.

The activation state notifying unit 23 notifies another equipment (here, the information processing apparatus 30) connected to the network 10 of activation/stop information representing the activation state of itself.

Namely, the activation state notifying unit 23 notifies another equipment on the network 10 that itself is activated when the power source of itself is activated to the ON state, and notifies another equipment on the network 10 that itself is stopped when the power source of itself is switched to the OFF state or to the stand-by state, for example.

The activation state notifying unit 23 responds to an inquiry from another equipment (here, a power source state confirming unit 55 of the information processing apparatus 30 to be described later), and sends the activation information when itself is active.

The information processing apparatus 30 as being a client executes a process on contents data kept by the server 20. The information processing apparatus 30 comprises a contents information obtaining unit (data information obtaining unit) 40, a contents list updating unit (data list updating unit) 41, a contents list keeping unit (data list keeping unit) 42, a server information obtaining unit (data retaining apparatus information obtaining unit) 50, a server list updating unit (data retaining apparatus list updating unit) 51, a server list keeping unit (data retaining apparatus list keeping unit) 52, a server monitoring unit (data retaining apparatus monitoring unit) 53, a displaying unit 60, a display controlling unit 61, a contents selecting unit (data selecting unit) 70, a contents processing unit (data processing unit) 71 and the activating unit 72.

The contents information obtaining unit 40 obtains contents information (data information) such as a contents name (data identification information), an attribute, a retaining place and so forth relating to contents data (for example, data of media contents) kept in the contents data keeping unit 21 in the server 20.

The contents list updating unit 41 makes a contents list (data list) on the basis of the contents information obtained by the contents information obtaining unit 40, and updates the contents list each time the contents information obtaining unit 40 newly obtains the contents information.

The contents list keeping unit 42 keeps the contents list made and updated by the contents updating unit 41 on the basis of the contents information obtained by the contents information obtaining unit 40.

Here, the contents list includes, at least, a contents name and a retaining place [for example, a server name (server ID; Identification)] at which contents data of this contents name is kept as the data identification information.

The server information obtaining unit 50 obtains server information (data retaining apparatus information) relating to another equipment (here, the server 20) connected to the network 10. The server information obtaining unit 50 detects another equipment connected to the network 10 to obtain a UUDI (Universally Unique Identification), an IP (Internet Protocol) address, an MAC (Media Access Control) address, a server name, etc., of the detected another equipment as server information.

The server list updating unit 51 makes a server list on the basis of the server information about the another equipment on the network obtained by the server information obtaining unit 50. Additionally, when the server information obtaining unit 50 obtains a change in the equipment (server) connected to the network 10, the server list updating unit 51 updates the server list on the basis of the change.

The server list keeping unit 52 keeps the server list made and updated by the server list updating unit 51 on the basis of the server information obtained by the server information obtaining unit 50.

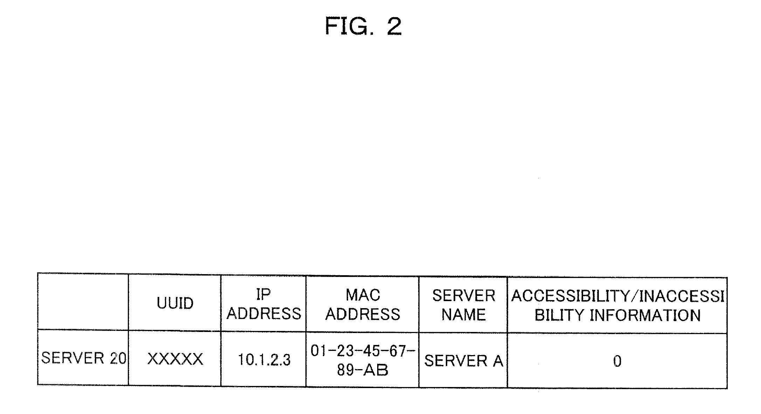

FIG. 2 is a diagram showing a server list kept by the server list keeping unit 52. As shown in FIG. 2, the server list includes a UUID, an IP address, an MAC address and a server name (data retaining apparatus name) of, and accessibility/inaccessibility information on each of other equipments (here, the server 20) connected to the network 10.

Here, the UUID is a unique ID (for example, ID of 128 Bits) as a server name possessed by the server 20, which is used to specify the server 20. The IP address is an address used when the information processing apparatus 30 communicates with the server 20. The MAC address is an address used when the activating unit 72 to be described later restores the server 20 to the activated state. The server name is used to be displayed on the displaying unit 60 connected to the information processing apparatus 30. The accessibility/inaccessibility information (here, flag) is information representing whether the server 20 is accessible or not, updated on the basis of monitoring by the server monitoring unit 53 to be described later. Here, when the server 20 is accessible, the information is set to "1," while set to "0" when the server 20 is inaccessible. Incidentally, in FIG. 2, the accessibility/inaccessibility information is set to "0."

The server monitoring unit 53 comprises an activation state receiving unit 54 and an activation state confirming unit 55 to monitor whether the server 20 is accessible or not on the basis of the server information (here, the UUID, in particular) obtained by the server information obtaining unit 50. The server monitoring unit 53 updates the accessibility/inaccessibility information in the server list kept by the server list keeping unit 52 on the basis of a situation of the monitoring (that is, whether the server 20 is accessible or not).

The activation state receiving unit 54 receives the activation/stop information transmitted from the activation state notifying unit 23 of the server 20.

The activation state confirming unit 55 inquires the activation state from the server 20 to confirm the activation state of the server 20 when itself (that is, the information processing unit 30) is activated or when an application used to execute a process on contents data kept by the server 20 is activated.

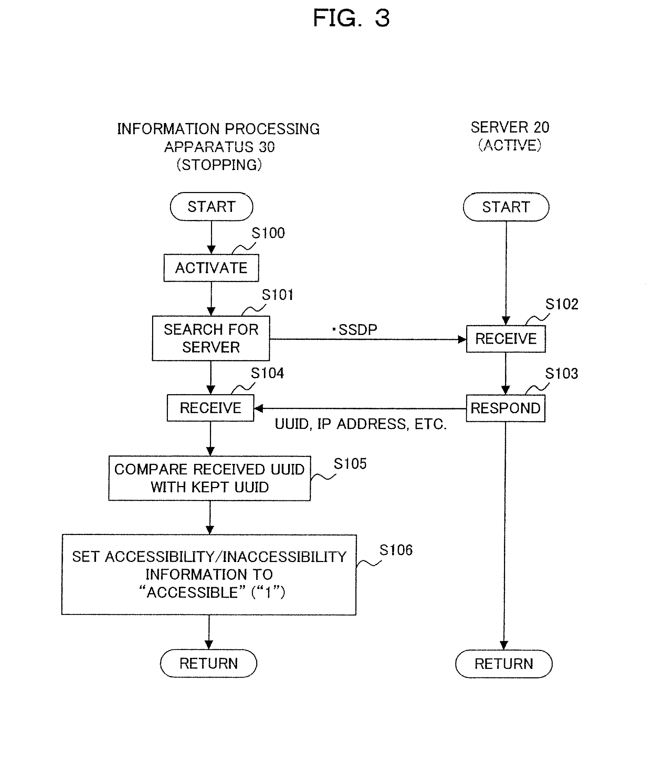

Now, description will be made of a method of monitoring the server 20 by the server monitoring unit 53. First, described is a method of monitoring (confirming the activation state of) the server 20 performed by the server monitoring unit 53 when the information processing apparatus 30 is activated. FIG. 3 is a flowchart (steps S100 to S106) at the time that the server 20 is active. As shown in FIG. 3, when the information processing apparatus 30 is activated (step S100), the activation state confirming unit 55 of the server monitoring unit 53 inquires the activation state from the server 20 (searches for the server) in order to confirm the activation state of the server 20 (step S101). At this time, the activation state confirming unit 55 designates a destination address and a destination port on the basis of the server list shown in FIG. 2 described above, and makes an inquiry. Since this information processing system 100 complies with UPnP (Universal Plug and Play), the inquiry is made by using SSDP (Simple Service Discovery Protocol).

When the server 20 receives the inquiry made by the activation state confirming unit 55 (step S102), the activation state notifying unit 23 of the server 20 transmits a response (activation information) when the server 20 is active (step S103), and the activation state receiving unit 54 receives the response from the server 20 (step S104). At this time, the server 20 transmits the IP address and the like along with the UUID as transmission information of the response.

Next, the information processing apparatus 30 compares the UUID received by the activation state receiving unit 54 with a UUID in the server list kept by the server list keeping unit 52 (step S105). When these UUDIs are in agreement with each other, the server monitoring unit 53 determines that the server 20 is active and is in the accessible state, and sets the accessibility/inaccessibility information on the server 20 in the server list to "accessible" (here, "1"). At this time, the IP address of the server 20 kept in the server list is updated.

As a result of comparison of the UUID received by the activation state receiving unit 54 with each of UUIDs in the server list kept by the server list keeping unit 52, there is not found any UUID coinciding thereto in the server list (that is, when the server cannot be specified), the server monitoring unit 53 determines it as a new server connection, and obtains server information on a newly-connected server by means of the server information obtaining unit 50, then newly registers this newly-connected server in the server list.

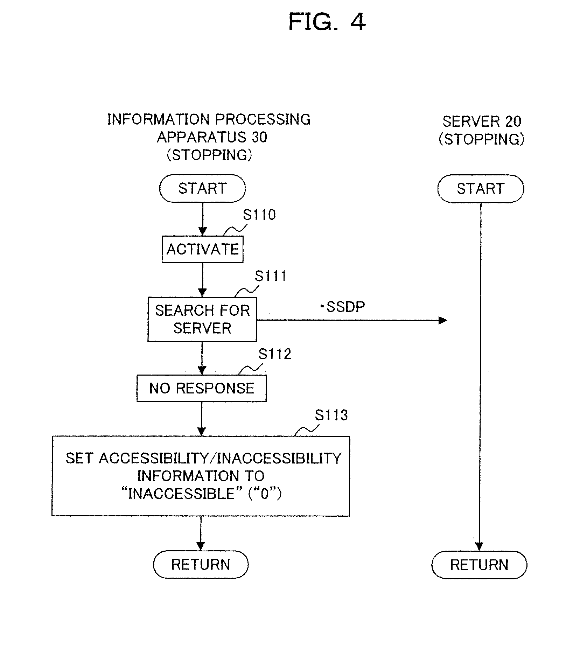

FIG. 4 is a flowchart in the case where the server 20 is inactive (steps S110 to S113). As shown in FIG. 4, when the information processing apparatus 30 is activated (step S110), the activation state confirming unit 55 inquires of the server 20 in a manner similar to the above step S101 (step Sill) . Since a response is not transmitted from the server 20 when the server 20 is stopped or is in the inaccessible state, the activation state receiving unit 54 receives no response (step S112). In this case, the server monitoring unit 53 determines that the server 20 is in the inaccessible state, and sets the accessibility/inaccessibility information on the server 20 in the server list kept by the server list keeping unit 52 to "inaccessible" (step S113; here, the accessibility/inaccessibility information remaining "0" and being kept).

As this, the server monitoring unit 53 confirms the connection state to the network 10 of the server 20 (that is, whether accessible or not) when itself is activated.

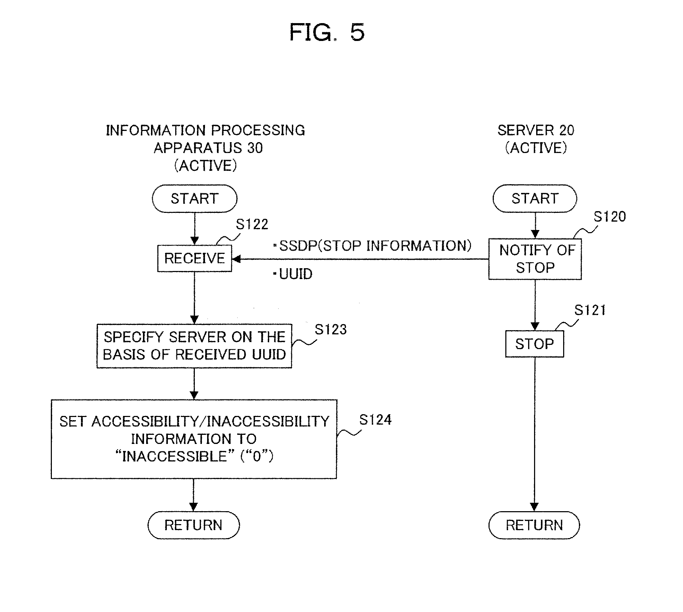

On the other hand, description will be made of a method of monitoring (confirming the activation state of) the server 20 performed by the server monitoring unit 53 while the information processing apparatus 30 is active. FIG. 5 is a flowchart (steps S120 to S124) in the case where the server 20 is stopped. When the server 20 is stopped and becomes inaccessible while the information processing apparatus 30 and the server 20 are both active, the server 20 notifies, by means of the activation state notifying unit 23, the information processing apparatus 30 of stop information (activation/stop information) representing that itself is stopped by using SSDP (step S120), and is stopped (step S121). The activation state notifying unit 23 transmits the UUID to the information processing apparatus 30 together with a notification of the stop information by SSDP.

When the activation state receiving unit 54 of the information processing apparatus 30 receives the stop information and the UUID transmitted from the activation state notifying unit 23 of the server 20 (step S122), the server monitoring unit 53 specifies the server 20 on the basis of the received UUID (step S123), and sets the accessibility/inaccessibility information on the server 20 in the server list kept by the server list keeping unit 52 to "inaccessible" (step S124; here, setting the accessibility/inaccessibility information to "0").

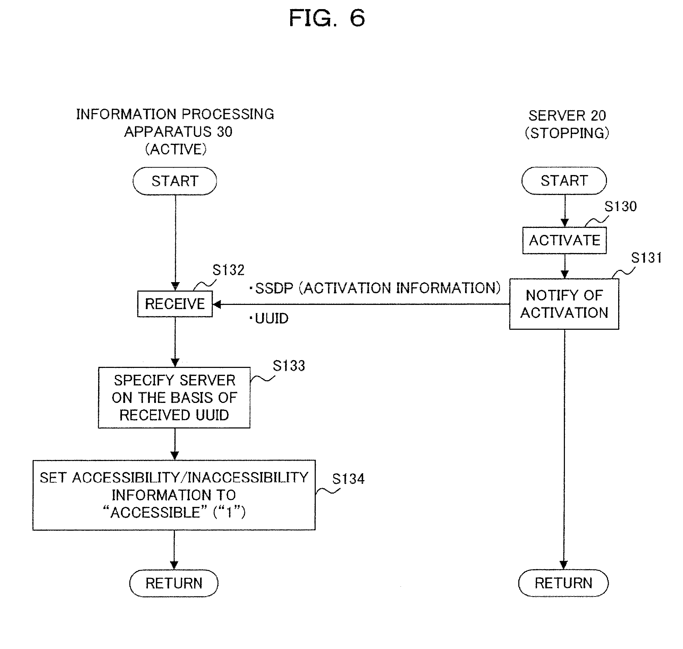

Next, description will be made of a case where the server 20, which has been stopped, and inaccessible up to that time, is activated and becomes accessible while the information processing apparatus 30 is active. FIG. 6 is a flowchart (steps S130 to S134) in the case where the server 20 is activated while the information processing apparatus 30 is active. As shown in FIG. 6, when the server 20 is activated (step S130), the activation state notifying unit 23 of the server 20 notifies the information processing apparatus 30 of activation information (activation/stop information) representing that the server 20 is activated by using SSDP (step S131). At this time, the activation state notifying unit 23 transmits the UUID to the information processing apparatus 30 together with the activation information.

When the activation state receiving unit 54 of the information processing apparatus 30 receives the activation information and the UUID transmitted from the activation state notifying unit 23 of the server 20 (step S132), the server monitoring unit 53 specifies the server 20 on the basis of the received UUID (step S133), and sets the accessibility/inaccessibility information on the server 20 in the server list kept by the server list keeping unit 52 to "accessible" (step S134; here, setting the accessibility/inaccessibility information to "1").

Incidentally, when the server cannot be specified at the above step S133, the server monitoring unit 53 determines it as a new server connection, obtains server information on the newly connected server by means of the server information obtaining unit 50, and newly registers this newly connected server in the server list.

As this, the server monitoring unit 53 of the information processing apparatus 30 detects a change in the connection state of the server 20 to the network 10 (that is, whether accessible or not) on the basis of the activation/stop information notified from the activation state notifying unit 23 of the server 20.

The displaying unit 60 is, for example, a monitor. The display controlling unit 61 controls display contents on the displaying unit 60.

The display controlling unit 61 performs a display control on the basis of an application program executing a process on contents data to display a contents name registered in the contents list, a server name in which contents data of the contents name is kept, and information representing whether the contents data of the contents name is accessible or not on the displaying unit 60, on the basis of the contents list kept by the contents list keeping unit 42 arid the server list kept by the server list keeping unit 52.

Namely, the display controlling unit 61 confirms a server name in which contents data of the contents name is kept on the basis of the contents list when displaying the contents name registered in the contents list on the displaying unit 60, and confirms whether the contents data of the contents name to be displayed on the displaying unit 60 is accessible or not by confirming the accessibility/inaccessibility information on a server of the server name on the basis of the server list. The display controlling unit 61 changes the display on the displaying unit 60 according to whether the contents data is accessible or not.

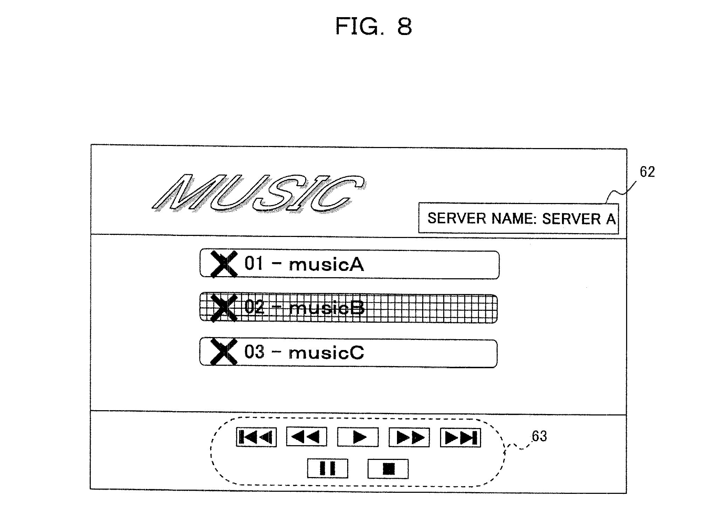

When the contents data is accessible, the display controlling unit 61 displays only a contents name of the contents data on the displaying unit 60, for example. When the contents data is inaccessible, the display controlling unit 61 displays an X-mark together with the contents name of the contents data on the displaying unit 60 (refer to FIG. 8 to be described later).

At this time, the display controlling unit 61 performs the display control on the basis of the contents list (namely, the latest contents list) based on contents information that the contents information obtaining unit 40 obtains latest.

In other words, the contents list used for display on the displaying unit 60 by the display controlling unit 61 is a contents list as the latest history based on contents information that the contents information obtaining unit 40 obtains latest in order to display it on the displaying unit 60.

Accordingly, in the case where an access to the server 20 is possible when the display controlling unit 61 newly displays a contents name or the like on the displaying unit 60, display based on contents information newly obtained by the contents information obtaining unit 40 is performed. In the case where an access to the server is impossible because the activation state of the server 20 is the stand-by state or the pause state, display is performed on the basis of the latest contents list kept beforehand by the contents list keeping unit 42, and the X-mark is displayed together with the contents name.

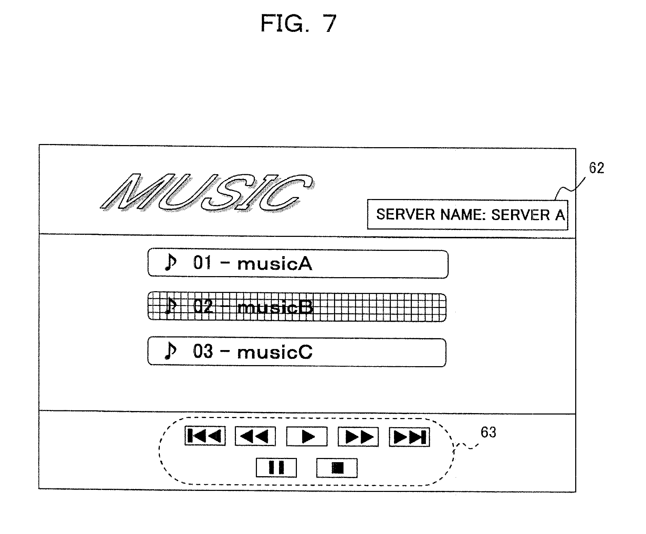

Now, an example of display on the displaying unit 60 will be explained. FIG. 7 is an example of display on the displaying unit 60 in the case where an access to the server 20 is possible. FIG. 8 is an example of display on the displaying unit 60 in the case where an access to the server 20 is impossible. As shown in FIG. 7, when an access to the server 20 is possible, contents names (music A to C) of contents data (here, music data) kept by the server 20 are displayed on the displaying unit 60 on the basis of the latest contents list. As shown in FIG. 8, when an access to the server 20 is impossible, the X-mark is displayed on the left of the contents name (music A to C) as information (here, information representing "inaccessible") representing whether an access to the contents data is accessible or not.

A shaded contents name (here, music B) in FIGS. 7 and 8 is designated by an input device such as a mouse or the like connected to the information processing apparatus 30, for example, representing a contents name selected by the contents selecting unit 70 to be described later. In the examples of display shown in FIGS. 7 and 8, a server name (here, server A) of the server 20 that keeps contents data of the contents name selected by the contents selecting unit 70 is displayed in a column denoted by a reference numeral 62 on the top right-hand corner on the screen. An Operation button group 63 shown in FIGS. 7 and 8 is used to execute a process on contents data of a selected contents name.

The contents selecting unit 70 selects a contents data, on which a process is to be executed, on the basis of the contents list. Here, a user who is operating the information processing apparatus 30 selects a contents name that the user desires to execute a process thereon among contents names displayed on the displaying unit 60, thereby selecting contents data of this contents name.

The contents processing unit 71 executes a process (when the contents data is music data, regeneration, edition or the like of the music, for example) on the contents data selected by the contents selecting unit 70.

The activating unit 72 activates (restores the power source state to the ON state) the server 20 in order to enable an access to the server 20 when the server 20 that keeps the contents selected by the contents selecting unit 70 is in the inaccessible state (that is, when the accessibility/inaccessibility information about the server 20 indicates "inaccessible").

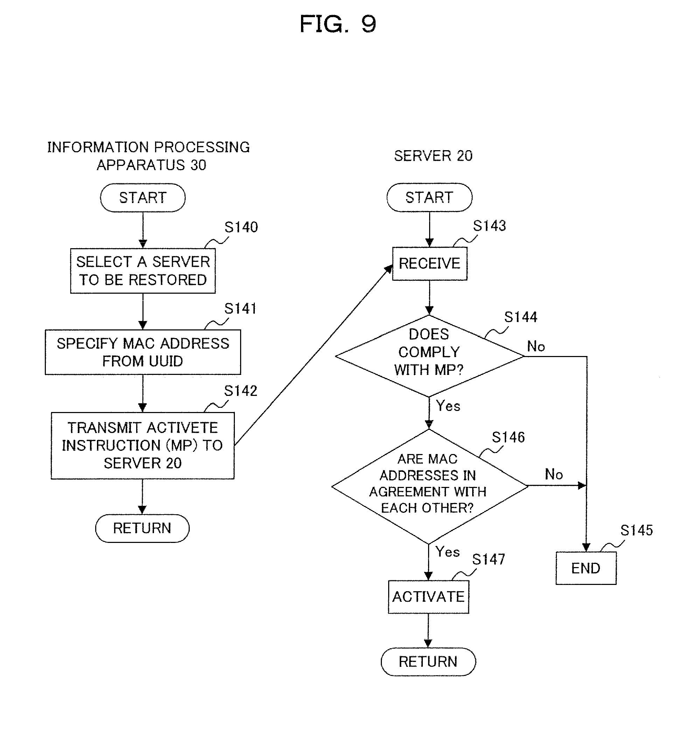

Now, description will be made of a procedure for restoring the server 20 to the active state by the activating unit 72 with reference to a flowchart (steps S140 to S147) shown in FIG. 9.

As shown in FIG. 9, the information processing apparatus 30 first selects a server (here, the server 20) to be restored to the activation state (turning the power source state thereof to the ON state) (step S140). The information processing apparatus 30 specifies an MAC address from the UUID of the selected server 20 on the basis of the server list kept by the server list keeping unit 52 (step S141), and transmits an activate instruction (MP: Magic Packet) to turn the power source state of the server 20 to the active state from the activating unit 72 to the power source controlling unit 22 of this server 20, designating this MAC address (step S142).

When receiving the activate instruction (MP) from the activating unit 72 of the information processing unit 30 (step S143), the power source controlling unit 22 of the server 20 determines whether the power source controlling unit 22 itself complies with the activate instruction transmitted from the activating unit 72 (step S144).

When not complying with the activate instruction (MP) (No route at step S144), the server 20 terminates the process (step S145).

When complying with the activate instruction (MP) (Yes route at step S144), the server 20 confirms whether the MAC address designated by the activating unit 72 agrees with its own MAC address (step S146).

When the MAC address designated by the activating unit 72 does not agree with its own MAC address (No route at step S146), the server 20 terminates the process (step S145). When the MAC address designated by the activating unit 72 agrees with own MAC address (Yes route at step S146), the power source controlling unit 22 of the server 20 restores its own power source to the active state (ON state) (step S147).

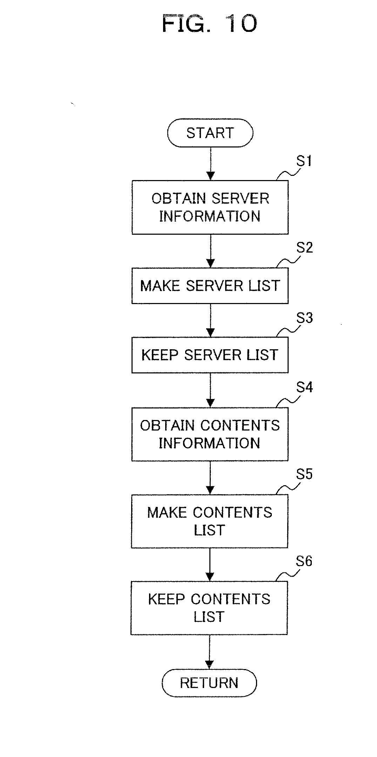

Next, description will be made of a contents displaying method (data displaying method; operation of the information processing system 100) according to the embodiment of this invention. In the contents displaying method according to the embodiment of this invention, the initial setting shown in a flowchart (steps S1 to S6) in FIG. 10 is performed at the time of the initial operation (activation) of the information processing system 100.

Namely, when the information processing apparatus 30 is initially activated, the server information obtaining unit 50 obtains server information about another equipment (here, the server 20) connected to the network 10 (step S1; data retaining apparatus information obtaining step), the server list updating unit 51 makes the server list shown in FIG. 2 described above (step S2; data retaining apparatus list making step), and the server list keeping unit 52 keeps the made server list (step S3; data retaining apparatus list keeping step).

The contents information obtaining unit 40 obtains contents information on contents data kept by the server 20 from the server 20 connected to the network 10 on the basis of the server list kept by the server list keeping unit 52, by using a retrieving function of UPnP, for example (step S4; data information obtaining step).

The contents list updating unit 41 then makes a contents list on the basis of the contents information obtained at the contents information obtaining step S4, by using at least a contents name and a retaining place of contents data of this contents name (step S5; data list making step), and the contents list keeping unit 42 keeps the made contents list (step S6; data list keeping step).

The information processing apparatus 30 executes a process on contents data by using the server list and the contents list made and kept as this.

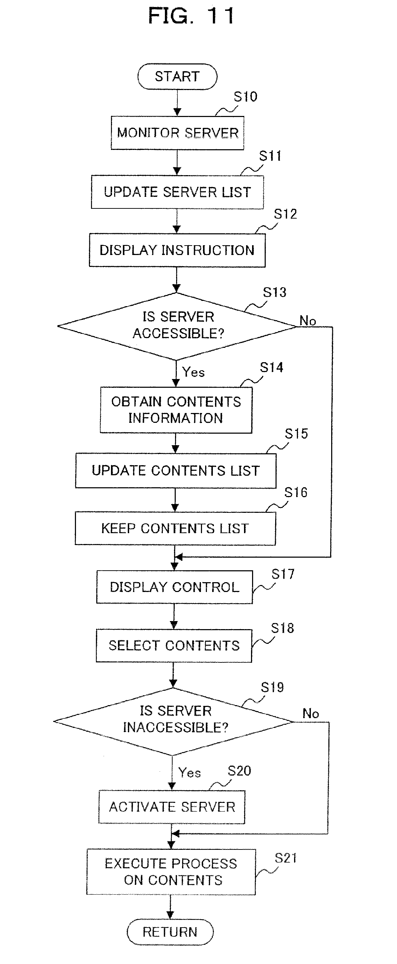

FIG. 11 is a flowchart (steps S10 to S21) showing a procedure for a contents displaying method (operation of the information processing system 100) according to the embodiment of this invention.

As shown in FIG. 11, in the information processing system 100, the server monitoring unit 53 always monitors the connection state (that is, the activation state) of the server 20 as described above with reference to FIGS. 3 through 6 (step S10; data retaining apparatus monitoring step), and updates the accessibility/inaccessibility information kept in the server list according to a situation of the monitoring (step S11).

When a display instruction to display contents on the display 60 is generated by the user who is operating the information processing apparatus 30 (step S12), the contents information obtaining unit 40 retrieves contents data kept in the contents data keeping unit 21 of the server 20 and again obtains contents information (step S14) when the server 20 is accessible (Yes route at step S13).

Next, the contents list updating unit 41 updates the contents list kept by the contents list keeping unit 42 on the basis of the contents information obtained this time (step S15), and the contents list keeping unit 42 keeps the updated contents list (step S16; data list keeping step).

When the server 20 is inaccessible (No route at step S13), the processes at the above steps S14 to S16 are not carried out.

The display controlling unit 61 performs the display control in order to display the contents name on the displaying unit 60 on the basis of the contents list kept by the contents list keeping unit 42 and the server list kept by the server list keeping unit 52 (step S17; display controlling step). Namely, the display controlling unit 61 performs the display control on the basis of the contents list newly updated this time when the server 20 is accessible. When the server 20 is inaccessible, the display controlling unit 61 performs the display control on the basis of the contents list kept latest by the contents list keeping unit 42. At this time, the accessibility/inaccessibility information in the server list indicates "inaccessible" because the server 20 is inaccessible. Thus, the display controlling unit 61 displays the X-mark together with the contents name on the displaying unit 60.

When the process on the contents data displayed on the displaying unit 60 is performed, the user of the information processing apparatus 30 selects a contents name displayed on the displaying unit 60 in order to execute a process on the contents data. Namely, the user selects contents that the user desires to execute a process thereon on the basis of the latest contents list kept by the contents list keeping unit 42 (step S18; data selecting step).

When the server 20 keeping the selected contents is in the inaccessible state (Yes route at step S19), the activating unit 72 activates the server 20 to bring the server into the accessible state in order to make the contents data selected at the above step S18 usable (step S20; activating step).

When the server 20 is accessible (No route at step S19), the process at the above step S20 is not performed.

The contents processing unit 71 executes a process (regeneration, edition or the like of music when the content data is music data, for example) on the contents data selected at the above step S18 (step S21).

As above, according to the information processing system 100 and the contents displaying method as being the embodiment of this invention, it is possible to display a display (contents name) of contents data kept by the server 20 on the displaying unit 60 on the basis of a contents list kept latest by the contents list keeping unit 42 even if an access to the server 20 is impossible because the contents list keeping unit 42 keeps contents information obtained by the contents information obtaining unit 40 as a contents list.

The user cannot discriminate whether displayed contents are accessible (usable) or not only by displaying them on the displaying unit 60 on the basis of the latest contents list. According to the information system 100 and the contents displaying method as being the embodiment of this invention, the server monitoring unit 53 always monitors the connection state of the server 20 and sets the accessibility/inaccessibility information in the server list kept by the server list keeping unit 52 to "inaccessible" when the server 20 is inaccessible, and the display controlling unit 61 displays information representing whether the server 20 keeping contents data of a contents name displayed on the displaying unit 60 is accessible or not (that is, whether the contents data is accessible or not) on the basis of this accessibility/inaccessibility information. Whereby, the user using the information processing apparatus 30 can discriminate at a glance whether contents being now displayed on the displaying unit 60 are usable or not.

Since the display controlling unit 61 displays, on the displaying unit 60, a server name of the server 20 keeping contents data of this contents name together with the contents name on the basis of the contents list kept by the contents list keeping unit 42, the user using the information processing apparatus 30 can recognize at a glance which server is inaccessible.

Since the activating unit 72 can activate the server 20 in order to make the server 20 accessible when the server 20 is in the stand-by state or in the pause state, or when the power source condition thereof is the OFF state, the user using the information processing apparatus 30 can readily activate (restore the power source condition to the ON state) the server 20 without bothering to go up to a place where the server 20 is installed.

### [2] As to Modifications of the Invention

Note that the present invention is not limited to the above embodiment, but may be modified in various ways without departing from the scope of the invention.

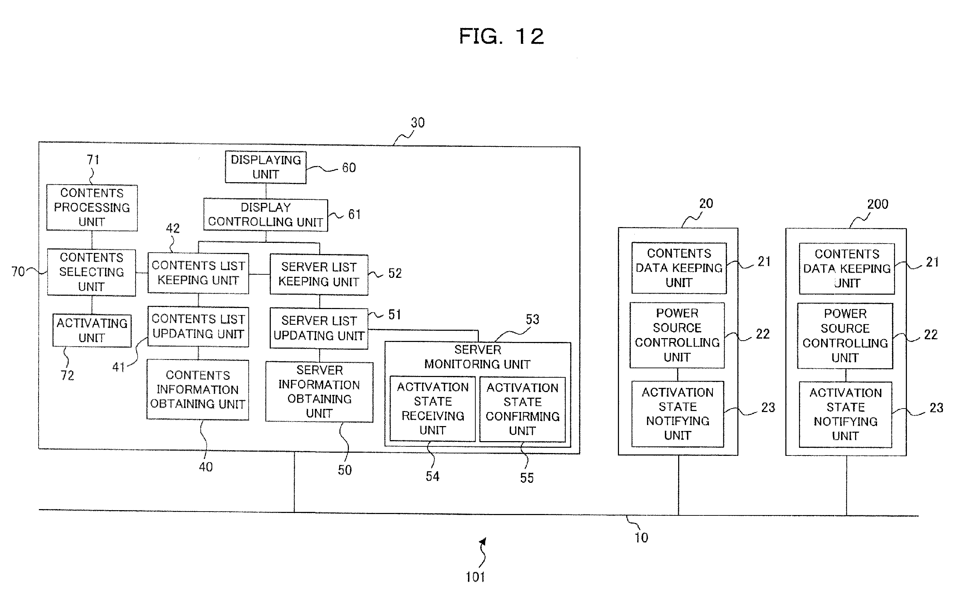

The above embodiment has been described by way of example where only the server 20 is connected as an equipment connected to the network 10 other than the information processing apparatus 30. However, this invention is not limited to this. Like an information processing system 101 shown in FIG. 12, a plurality (here, two) servers 20 and 200 may be connected to the network 10, for example. Incidentally, the server 200 is configured similarly to the server 20. In this case, the information processing apparatus 30 performs a process on the server 200 similar to the process on the server 20.

Accordingly, when the server 20 is in the accessible state but the server 200 is in the inaccessible state, for example, the contents information obtaining unit 40 newly obtains contents information about the accessible server 20, and the display controlling unit 61 displays on the basis of a contents list based on the newly obtained contents information. On the other hand, for the inaccessible server 200, the display controlling unit 61 displays on the basis of a contents list based on contents information obtained latest by the contents information obtaining unit 40.

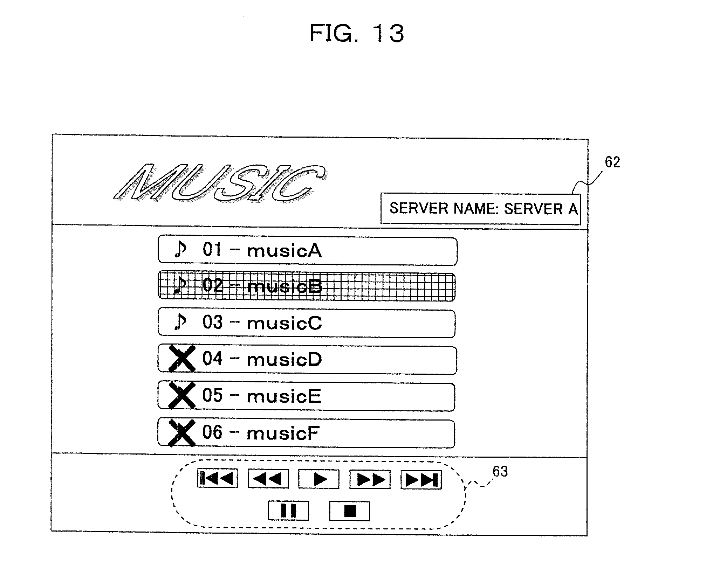

In this case, the display controlling unit 61 attaches, on the displaying unit 60, the X-mark to contents names (music DtoF) of contents data kept by the server 200, while not attaching the X-mark to contents names (music A to C) of contents data kept by the server 20, as shown in FIG. 13.

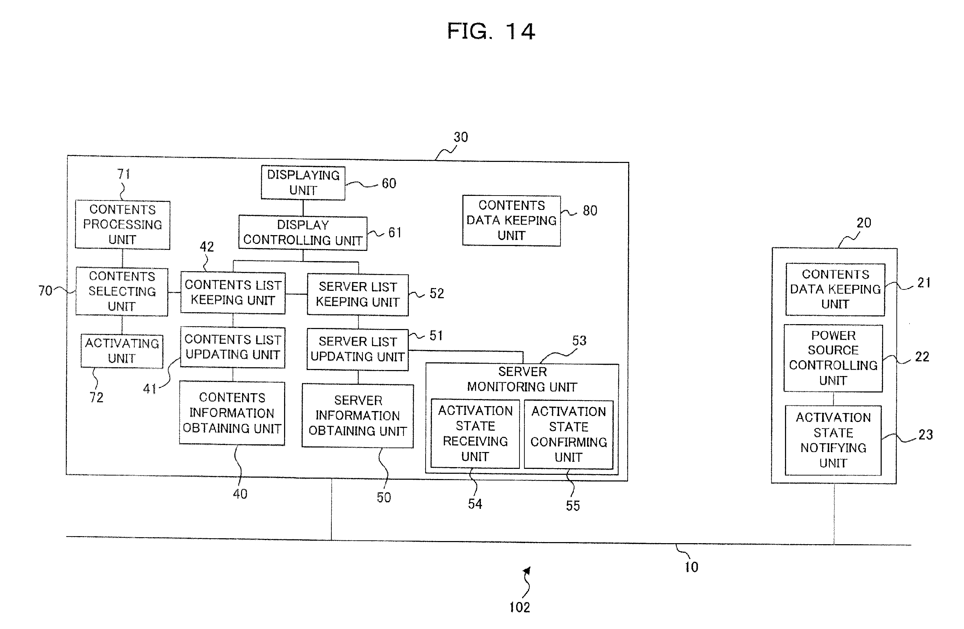

In the above embodiment, the information processing apparatus 30 performs the process on only contents data kept by the server 20. However, this invention is not limited to this. For example, like the information processing system 102 shown in FIG. 14, the information processing apparatus 30 may have a contents data keeping unit 80 for keeping contents data, and the contents processing unit 71 of the information processing apparatus 30 may perform a process on the contents data kept by the contents data keeping unit 80. In which case, the contents information obtaining unit 40, the contents list updating unit 41 and the contents list keeping unit 42 handle the contents data kept by the contents data keeping unit 80 in a manner similar to the manner of handling the consents data kept in the contents data keeping unit 21 of the server 20.

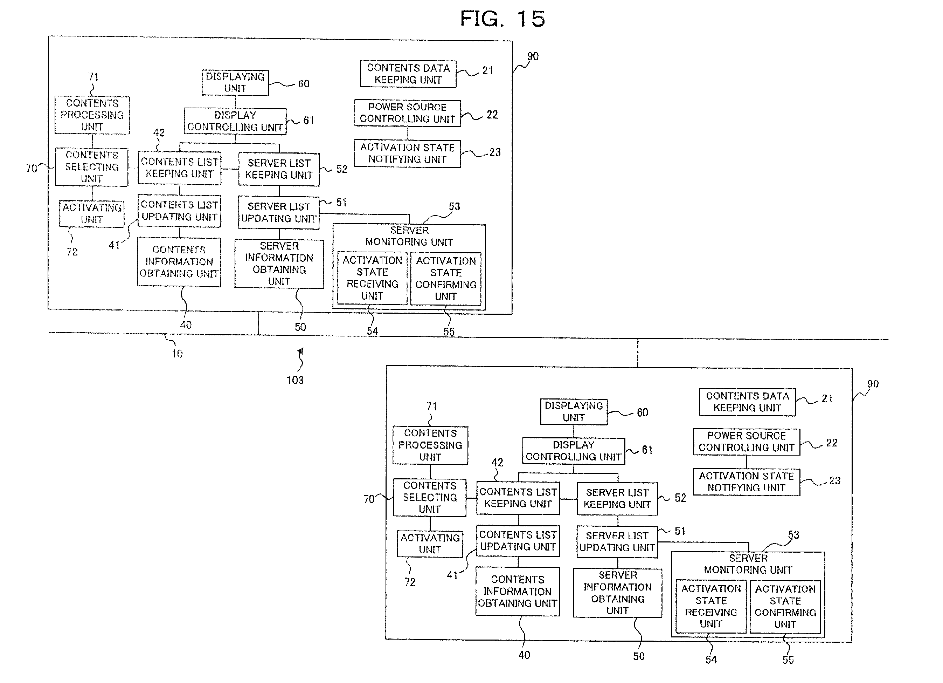

Further, like an information processing system 103 shown in FIG. 15, a plurality (here, two) of information processing apparatuses 90 having both the function of the server 20 described above and the function of the information processing apparatus 30 described above may be connected on the network 10, and these information processing apparatuses 90 may operate as both the above information processing apparatus 30 and the above server 20, for example.

In the above embodiment, the accessibility/inaccessibility information about the server 20 is kept in only the server list. However, this invention is not limited to this. Alternatively, the accessibility/inaccessibility information about the server 20 may be kept in the contents list.

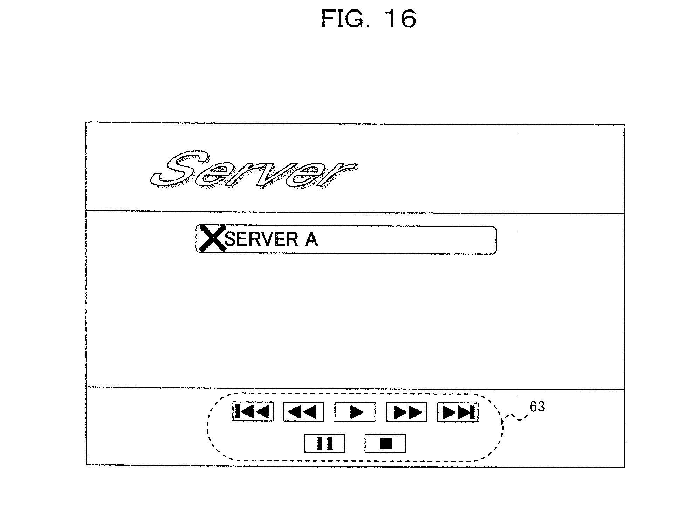

The above embodiment has been described by way of only one example where the display controlling unit 61 displays contents names on the displaying unit 60 as shown in FIGS. 7 and 8, for example. However, in the above-described embodiment, the display controlling unit 61 may display a server name (here, server A) of the server 20 connected to the network 10 on the basis of the server list kept by the server list keeping unit 52 as shown in FIG. 16, for example. In which case, the X-mark as being information representing that the server 20 is inaccessible is displayed together with a server name of the server 20 when the server 20 is inaccessible, on the basis of the accessibility/inaccessibility information kept in the server list, as shown in FIG. 16.

In the above embodiment, the activating unit 72 may be activated by operating a mouse connected to the information processing apparatus 30 in a predetermined way. On a display screen shown in FIG. 8 or a display screen shown in FIG. 16, the user selects a contents name or a server name attached the X-mark that the user desires to perform a process by operating the mouse, and operates the mouse in a predetermined way (for example, right-click, left-click, double-click) to operate the activating unit 72, for example. Whereby, the user using the information processing apparatus 30 can readily activate the server without any cumbersome operation.

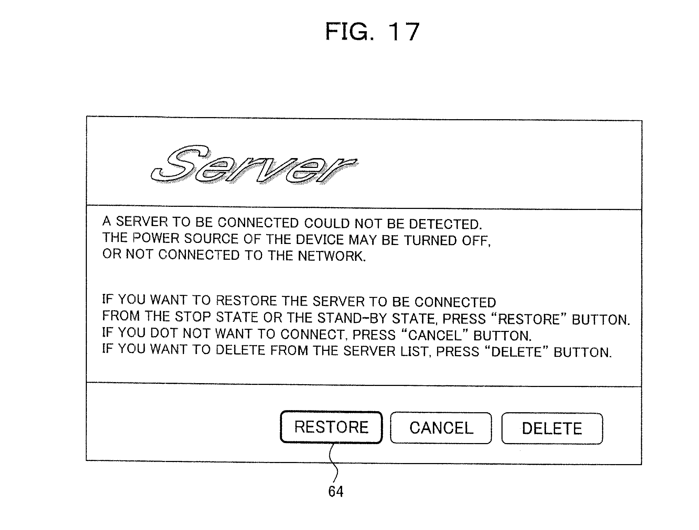

At this time, a display shown in FIG. 17 may be displayed once on the displaying unit 60, and a restore button 64 on the display screen may be again clicked by the mouse to operate the activating unit 72.

### [3] Others

The functions of the power source controlling unit 22, the activation state notifying unit 23, the contents information obtaining unit (data information obtaining unit) 40, the contents list updating unit (data list updating unit) 41, the contents list keeping unit (data list keeping unit) 42, the server information obtaining unit (data retaining apparatus information obtaining unit) 50, the server list updating unit (data retaining apparatus list updating unit) 51, the server list keeping unit (data retaining apparatus list keeping unit) 52, the server monitoring unit (data retaining apparatus monitoring unit) 53, the activation state receiving unit 54, the activation state confirming unit 55, the display controlling unit 61, the contents selecting unit (data selecting unit) 70, the contents processing unit (data processing unit) 71 and the activating unit 72 are realized by executing a predetermined program (data displaying program) by a computer (including CPU, information processing apparatus, various terminals).

This program is provided in a form in which the program is recorded on a computer readable recording medium such as a flexible disk, a CD-ROM, a CD-R, a CD-RW, a DVD or the like. In this case, the computer reads the data displaying program from the recording medium, transfers the program to the internal storage or an external storage to store it, and uses the same. The program may be recorded on a storage (recording medium) such as a magnetic disk, an optical disk, a magneto-optical disk or the like, and provided to the computer from the storage over a communication line.

Here, the computer is a concept including hardware and an OS (Operating System), standing for hardware operating under control of the OS. When the OS is unnecessary and the application program solely operates the hardware, the hardware itself corresponds to the computer. The hardware has at least a microprocessor such as a CPU or the like, and a means for reading the computer program recorded on the recording medium. The application program as being the above data displaying program includes program codes for making the computer realize the functions of the power source controlling unit 22, the activation state notifying unit 23, the contents information obtaining unit 40, the contents list updating unit 41, the contents list keeping unit 42, the server information obtaining unit 50, the server list updating unit 51, the server list keeping unit 52, the server monitoring unit 53, the activation state receiving unit 54, the activation state confirming unit 55, the display controlling unit 61, the contents selecting unit 70, the contents processing unit 71 and the activating unit 72. Apart of these functions may be realized by, not the application program, but the OS.

As the recording medium in the embodiment of this invention, there may be used various kinds of computer readable media such as an IC card, a ROM cartridge, a magnetic tape, a punched card, an internal storage (memory such as RAM, ROM or the like) of a computer, an external storage, a printed matter on which codes such as bar codes or the like are printed and so forth, other than a flexible disk, a CD-ROM, a CD-R, a CD-RW, a DVD, a magnetic disk, an optical disk and a magneto-optical disk mentioned above.

## Claims

1. An information processing apparatus connected to at least one data retaining apparatus over a network to execute a process on data kept in said data retaining apparatus, comprising:
a data information obtaining unit obtaining data information relating to the data kept in said data retaining apparatus;
a data list keeping unit keeping data identification information about the data and a retaining place in which the data is kept as a data list on the basis of the data information obtained by said data information obtaining unit;
a data retaining apparatus monitoring unit monitoring whether said data retaining apparatus is accessible or not on the basis of data retaining apparatus information relating to said data retaining apparatus connected to said network; and
a display controlling unit displaying the data identification information registered in the data list together with information representing whether the data of the data identification information is accessible or not on a displaying unit on the basis of the data list kept by said data list keeping unit and a situation of the monitoring by said data retaining apparatus monitoring unit.

2. The information processing apparatus according to claim 1, wherein the data list is based on data information obtained last by said data information obtaining unit in order to display the data information on the displaying unit by said display controlling unit.

3. The information processing apparatus according to claim 1 or 2, wherein said data retaining apparatus monitoring unit detects a change in connection state of said data retaining apparatus to said network to monitor whether said data retaining apparatus is accessible or not.

4. The information processing apparatus according to claim 3, wherein said data retaining apparatus monitoring unit detects the change in connection state of said data retaining apparatus to said network on the basis of activation/stop information transmitted from said data retaining apparatus.

5. The information processing apparatus according to any one of claims 1 through 4, wherein said display controlling unit displays a data retaining apparatus name of said data retaining apparatus in which the data of the data identification information is kept together with the data identification information on the displaying unit.

6. The information processing apparatus according to any one of claims 1 through 5 further comprising:
a data selecting unit selecting data to be processed on the basis of the data list; and
an activating unit activating said data retaining apparatus which keeps the data selected by said data selecting unit, when the situation of the monitoring of said data retaining apparatus by said data retaining apparatus monitoring unit is inaccessible.

7. A data displaying method in an information processing apparatus connected to at least one data retaining apparatus over a network to execute a process on data kept in said data retaining apparatus, said data displaying method for displaying the data on a displaying unit equipped to said information processing apparatus, comprising the steps of:
a data information obtaining step obtaining data information relating to the data kept in said data retaining apparatus;
a data list keeping step keeping data identification information of the data and a retaining place in which the data is kept as a data list on the basis of the data information obtained at said data information obtaining step;
a data retaining apparatus monitoring step monitoring whether said data retaining apparatus is accessible or not on the basis of data retaining apparatus information relating to said data retaining apparatus connected to said network; and
a display controlling step displaying, on said displaying unit, the data identification information registered in the data list together with information representing whether the data of the data identification information is accessible or not on the basis of the data list kept at said data list keeping step and a situation of the monitoring at said data retaining apparatus monitoring step.

8. The data displaying method according to claim 7, wherein the data list is based on data information obtained last at said data information obtaining step in order to display the data information on the displaying unit at said display controlling step.

9. The data displaying method according to claim 7 or 8, wherein, at said data retaining apparatus monitoring step, a change in connection state of said data retaining apparatus to said network is detected to monitor whether said data retaining apparatus is accessible or not.

10. The data displaying method according to claim 9, wherein, at said data retaining apparatus monitoring step, the change in connection state of said data retaining apparatus to said network is detected on the basis of activation/stop information transmitted from said data retaining apparatus.

11. The data displaying method according to any one of claims 7 through 10, wherein, at said display controlling step, a data retaining apparatus name of said data retaining apparatus in which the data of the data identification information is kept is displayed together with the data identification information on the displaying unit.

12. The data displaying method according to any one of claims 7 through 11 further comprising the steps of:
a data selecting step selecting data to be processed on the basis of the data list; and
an activating step activating said data retaining apparatus which keeps the data selected at said data selecting step, when the situation of the monitoring at said data retaining apparatus monitoring step of said data retaining apparatus is inaccessible.

13. An information processing system in which at least one data retaining apparatus and an information processing apparatus executing a process on data kept in said data retaining apparatus are connected, over a network, comprising:
a data information obtaining unit obtaining data information relating to the data kept in said data retaining apparatus;
a data list keeping unit keeping data identification information about the data and a retaining place in which the data is kept as a data list on the basis of the data information obtained by said data information obtaining unit;
a data retaining apparatus monitoring unit monitoring whether said data retaining apparatus is accessible or not on the basis of data retaining apparatus information relating to said data retaining apparatus connected to said network; and
a display controlling unit displaying the data identification information registered in the data list together with information representing whether the data of the data identification information is accessible or not on a displaying unit connected to said information processing apparatus on the basis of the data list kept by said data list keeping unit and a situation of the monitoring by said data retaining apparatus monitoring unit.

14. The information processing system according to claim 13, wherein the data list is based on data information obtained last by said data information obtaining unit in order to display the data information on the displaying unit by said display controlling unit.

15. The information processing system according to claim 13 or 14, wherein said data retaining apparatus monitoring unit detects a change in connection state of said data retaining apparatus to said network to monitor whether said data retaining apparatus is accessible or not.

16. The information processing system according to claim 15, wherein said data retaining apparatus comprises an activation notifying unit notifying said data retaining apparatus monitoring unit of activation/stop information representing an activation state of said data retaining apparatus itself; and
said data retaining apparatus monitoring unit detects the change in connection state of said data retaining apparatus to said network on the basis of the activation/stop information n transmitted from said activation notifying unit of said data retaining apparatus.

17. The information processing system according to any one of claims 13 through 16, wherein said display controlling unit displays a data retaining apparatus name of said data retaining apparatus in which the data of the data identification information is kept together with the data identification information on the displaying unit.

18. The information processing system according to any one of claims 13 through 17 further comprising:
a data selecting unit selecting data to be processed on the basis of the data list; and
an activating unit activating said data retaining apparatus which keeps the data selected by said data selecting unit, when the a situation of the monitoring of said data retaining apparatus by said data retaining apparatus monitoring unit is inaccessible.

19. A data displaying program for making a computer realize a function of displaying data on a displaying unit connected to an information processing apparatus in an information processing system in which at least one data retaining apparatus and said information processing apparatus executing a process on the data kept in said data retaining apparatus are connected over a network, said computer program making said computer function as:
a data information obtaining unit obtaining data information relating to the data kept in said data retaining apparatus;
a data list keeping unit keeping data identification information about the data and a retaining place in which the data is kept as a data list on the basis of the data information obtained by said data information obtaining unit;
a data retaining apparatus monitoring unit monitoring whether said data retaining apparatus is accessible or not on the basis of data retaining apparatus information relating to said data retaining apparatus connected to said network; and
a display controlling unit displaying the data identification information registered in the data list together with information representing whether the data of the data identification information is accessible or not on a displaying unit on the basis of the data list kept by said data list keeping unit and a situation of the monitoring by said data retaining apparatus monitoring unit.

20. A computer readable recording medium recorded thereon a data displaying program for making a computer realize a function of displaying data on a displaying unit connected to an information processing apparatus in an information processing system in which at least one data retaining apparatus and said information processing apparatus executing a process on the data kept in said data retaining apparatus are connected over a network, said data displaying program making said computer function as:
a data information obtaining unit obtaining data information relating to the data kept in said data retaining apparatus;
a data list keeping unit keeping data identification information about the data and a retaining place in which the data is kept as a data list on the basis of the data information obtained by said data information obtaining unit;
a data retaining apparatus monitoring unit monitoring whether said data retaining apparatus is accessible or not on the basis of data retaining apparatus information relating to said data retaining apparatus connected to said network; and
a display controlling unit displaying the data identification information registered in the data list together with information representing whether the data of the data identification information is accessible or not on a displaying unit on the basis of the data list kept by said data list keeping unit and a situation of the monitoring by said data retaining apparatus monitoring unit.
